# EUROPÄISCHE PATENTANMELDUNG

(11) **EP 1 557 136 A1**
(43) Veröffentlichungstag der Anmeldung: **27.07.2005**
(21) Anmeldenummer: 05000294.8
(22) Anmeldetag: 08.01.2005
(51) Int. Cl.: A61C 13/00, A61C 5/10, C25D 1/22

(54) **Galvanoforming mit Trennlack**

(30) Priorität: 23.01.2004 DE 102004003747
(71) Anmelder: Heraeus Kulzer GmbH, 63450 Hanau (DE)
(72) Erfinder: Donyavi, Davood, 45139 Essen (DE); Koops, Ulrich, Dr., 64380 Rossdorf (DE)
(74) Vertreter: Kühn, Hans-Christian

(57) **Zusammenfassung**

Bei einem Verfahren zur Herstellung von dentalen Formteilen nach dem Galvanoforming Verfahren wird vor dem Galvanisieren ein Trennlack auf das Grundgerüst aufgebracht, und nach dem Galvanisieren die Metallform vom Grundgerüst abgezogen.

## Beschreibung

Die Erfindung betrifft ein Verfahren zur Herstellung von dentalen Formteilen durch Galvanoforming und die Verwendung eines Trennlacks beim Galvanoforming-Verfahren.

Im Dentalbereich werden prothetische Formteile heute standardmässig auch mit Hilfe galvanischer Metallabscheidung hergestellt. Man spricht hier vom sog. Galvanoforming. Dabei kommen hauptsächlich Edelmetalle wie Gold zum Einsatz. Es ist bereits seit längerem bekannt, Zahnersatz durch galvanische Abscheidung, sogenanntes Galvanoforming herzustellen. Üblicherweise wird dabei reines Gold aus einem Galvanisierbad, welches das Gold z.B. in Form eines ungiftigen Sulfit-Komplexes enthält, abgeschieden. Die Abscheidung erfolgt beispielsweise auf einem dentalen Grundgerüst, das in seiner Form einem vom Zahnarzt präparierten Zahnstumpf entspricht. Für gewöhnlich wird das Grundgerüst vor dem Galvanisieren mit Leitsilber überzogen. Das galvanisch abgeschiedene Gold kann dann als kappenartiges Teil von dem Grundgerüst entfernt und weiterbearbeitet werden. Die Goldkappe bildet zusammen mit einer auf ihr aufgebrachten Keramik- oder Kunststoffverblendung eine Krone, die sogenannte Galvanokrone, die dann auf den im Mund des Patienten verbliebenen Zahnstumpf aufgesetzt wird

Auf galvanischem Weg werden auch Formteile hergestellt, die in der Doppelkronen- und Brückentechnik eingesetzt werden. Auch eine direkte Verwendung galvanisch abgeschiedener Formkörper ist möglich.

Ausführlich ist das Vorgehen in z.B. "Galvanoprothetik: neue Wege zu biologischem Zahnersatz", J. Wirz, A. Hoffmann (Hrsg.) Quintessenzverlag 1999 ISBN 3-87652-486-5, Quintessenz Zahntechnik 2/2001, S. 157-170 beschrieben.

Meist ist es nicht möglich, das erzeugte Metallteil so zu entfernen, dass das Grundgerüst erhalten bleibt. Es stellt sich die Aufgabe, dies zu ermöglichen.

Dazu wird erfindungsgemäß ein Trennlack eingesetzt, so dass die Aufgabe der Erfindung auch darin gesehen werden kann, das Galvanoformingverfahren zu verbessern, indem die Trennung, z.B. durch Abziehen vom Grundgerüst erleichtert wird.

Als Trennlack kommen schnelltrocknende Lacke in Frage, die mit Keramik und Metall keine starke Haftung eingehen.

Als Trennlack hat sich besonders eine Polyvinvylacetat Dispersion (Copolymerisat aus Vinylacetat und Maleinsäuredibutylester) auf Wasserbasis bewährt. Dieser Lack trocknet nach 10 min vollständig und verunreinigt den Elektrolyten nicht. Aufgrund der thermoplastischen Eigenschaften des Lacks kann die galvanisierte Struktur nach kurzem thermischem Belasten (Wasserdampf) vom Grundgerüst abgehoben werden. Nach der Galvanisierung und dem Entfernen der galvaniserten Struktur ist der Lack vom Grundgerüst abziehbar. Dadurch bleibt das Grundgerüst weiter verwendbar.

Es ergeben sich erhebliche Vorteile für das Galvanoformingverfahren. Der Ausarbeitungsprozess der galvanisierten Strukturen wird um etwa 45 Minuten verkürzt. Das Grundgerüst kann weiter verwendet werden, so dass bei einer zweiten Verwendung die Herstellung des Arbeitsmodells (120 Minuten) eingespart wird.

### Beispiel:

Auf einen präparierten Modellstumpf (aus z. B. Gips) wird der Trennlack (Dispersion aus Copolymerisat von Vinylacetat und Maleinsäuredibutylester auf Wasserbasis) durch Pinseln oder Sprühen aufgebracht und 10 Minuten lang an Raumtemperatur getrocknet. Anschließend wird wie gewohnt die zu galvanisierende Fläche leitfähig gemacht (z. B. durch Silberleitlack).

Der Stumpf wird in einen handelsüblichen Galvanisierbad unter normalen Bedingungen galvanisiert.

Anschließend wird die entstandene Kappe erwärmt (z. B. mit dem Dampf eines Dampfstrahlgerätes oder einem Föhn) und kann dann mechanisch abgezogen werden. Der lackierte Stumpf kommt unversehrt zum Vorschein. Der Lack kann mechanisch durch Abziehen entfernt werden. Der Stumpf wird zur Wiederverwendung bereitgehalten.

## Patentansprüche

1. Verfahren zur Herstellung von dentalen Formteilen nach dem Galvanoforming Verfahren, **dadurch gekennzeichnet, dass** vor dem Galvanisieren ein Trennlack auf das Grundgerüst aufgebracht wird, und nach dem Galvanisieren die Metallform vom Grundgerüst abgetrennt wird.

2. Verfahren nach Anspruch 1, **dadurch gekennzeichnet, dass** nach dem Abziehen der Metallform der Trennlack vom Grundgerüst entfernt wird.

3. Verfahren nach Anspruch 1 oder 2, **dadurch gekennzeichnet, dass** der Trennlack eine Polyvinylacetat Dispersion auf Wasserbasis ist.

4. Verwendung eines Trennlacks beim Galvanoforming Verfahren durch Aufbringen auf das Grundgerüst vor dem Galvanisieren.

5. Verwendung nach Anspruch 5, **dadurch gekennzeichnet, dass** der Trennlack eine Polyvinylacetat Dispersion auf Wasserbasis ist.
